# EUROPEAN PATENT APPLICATION

(11) **EP 3 603 882 A1**
(43) Date of publication of application: **05.02.2020**
(21) Application number: 17904194.2
(22) Date of filing: 31.03.2017
(51) Int. Cl.: B23Q 1/48

(54) **MACHINE TOOL**

(71) Applicant: Makino Milling Machine Co., Ltd., Tokyo 152-8578 (JP)
(72) Inventor: SANO, Yuji, Minamitsuru-gun Yamanashi 401-0310 (JP)
(74) Representative: McWilliams, David John
(86) International application number: PCT/JP2017/013806
(87) International publication number: WO 2018/179412

(57) **Abstract**

This machine tool (100) has: a main shaft (152) having a tool (T) mounted on the tip thereof; a main shaft head (120) that rotatably supports the main shaft; orthogonal triaxial linear feed shafts that move the main shaft and a table (122), on which a workpiece is mounted, relative to one another; and a rotational feed shaft that is capable of changing the orientation of the rotational axis (O) of the main shaft. The machine tool (100) is provided with: a rotational feed shaft device (118) that is not parallel to any of the linear feed shafts and that rotates the main shaft head around an inclined axis (O_{I}) that intersects the rotational axis of the main shaft; and a main shaft head base (112) that rotatably supports the main shaft head so that the point of intersection between the rotational axis and the inclined axis of the main shaft coincides with a defined reference point (P_{R}) at the tip side of the main shaft.

## Description

### FIELD

The present invention relates to a machine tool which rotatably feeds a spindle head about an inclination axis which is not parallel to any of orthogonal triaxial linear feed axes.

### BACKGROUND

In the field of machine tools, multi-axis control machine tools which comprise a spindle having a tip on which a tool is mounted, a spindle head which supports the spindle so as to be rotatable about an axis of rotation, orthogonal triaxial linear feed axes which move the spindle and a table on which a workpiece is mounted relative to each other, and a rotary feed axis which can change the orientation of the axis of rotation of the spindle, and in which a workpiece is affixed to the table, and various types of machining can be performed without removing the workpiece from the table are known.

Patent Literature 1 discloses a machine tool which is capable of indexing a spindle in three mutually orthogonal directions, which comprises a spindle head which can position the spindle in three positions at 120° intervals corresponding to horizontal positions in two directions and a vertical position. Furthermore, Patent Literature 2 discloses a machine tool, wherein the spindle head comprises a spindle housing attached to a horizontal slider so as to be rotatable about the horizontal axis, and a fork head is attached to a lower end part of the spindle housing so as to be rotatable about another horizontal axis different than the aforementioned horizontal axis.

### [CITATION LIST]

### [PATENT LITERATURE]

[PTL 1] Japanese Unexamined Patent Publication (Kokai) No. 58-077428
[PTL 2] Japanese Unexamined Patent Publication (Kokai) No. 2005-527387

### SUMMARY

### [TECHNICAL PROBLEM]

In the machine tool of Patent Literature 1, since the spindle head can only be positioned at three positions at 120° intervals about the inclination axis b, the spindle can only be positioned in three mutually orthogonal directions consisting of two horizontal directions and the vertical direction, whereby there is a problem that undercutting in which the workpiece is machined by upwardly protruding the tool from the lower surface of the workpiece cannot be performed.

In the machine tool of Patent Literature 2, during undercutting, the fork head 15 is arranged so that the spindle housing 13 is above the tool, and thus, a long tool must be used since it is necessary to avoid interference between the spindle housing and the workpiece. Thus, there is a problem in that machining errors become significant when the tool is bent or falls. Furthermore, since the position of the center of rotation of the fork head is spaced from the tool, there is also a problem in that the rotational positioning error of the fork head increases at the tool tip in proportion to the distance from the center of rotation of the fork head to the tip of the tool, i.e., in proportion to the lever ratio.

The present invention aims to solve such problems of the prior art, and the object of the present invention is to provide a machine tool which can perform undercutting with high precision without the use of a long tool, as in the machine tool of Patent Literature 2.

### [SOLUTION TO PROBLEM]

In order to achieve the object described above, the present invention provides a machine tool having a spindle having a tip on which a tool is mounted, a spindle head which supports the spindle so as to rotate about an axis of rotation, orthogonal triaxial linear feed axes which move the spindle and a table on which a workpiece is attached relative to each other, and a rotary feed axis which can change the orientation of the axis of rotation of the spindle, the machine tool further comprising:
a rotary feed axis device configured to rotate the spindle heat about an inclination axis which is not parallel to any of the linear feed axes, and intersects with the axis of rotation of the spindle, and a spindle head base which rotatably supports the spindle head so that an intersection between the axis of rotation of the spindle and the inclination axis coincides with a reference point defined on a tip side of the spindle.

### [ADVANTAGEOUS EFFECTS OF INVENTION]

According to the present invention, since undercutting, in which a workpiece is machined by a tool which upwardly protrudes from the lower surface of the workpiece, can be performed, and the spindle head is supported on the spindle head base so that the inclination axis intersects the axis of rotation of the spindle at a reference point defined on the tip side of the spindle, the machine tool can perform various types of machining with high machining accuracy regardless of the rotational position about the inclination axis. This is because the center of rotation for changing the posture of the spindle head is located on the tip side of the spindle. Thus, interference between the spindle head and the workpiece is less likely to occur, whereby rigidity of the tool is increased, and the distance between the center of rotation for changing the posture of the spindle head and the machining point of the tip of the tool is reduced, whereby rotational positioning errors of the spindle head do not become significant at the tool tip.

### BRIEF DESCRIPTION OF DRAWINGS

FIG. 1 is a perspective view of a machine tool according to a preferred embodiment of the present invention.
FIG. 2 is an enlarged partial perspective view showing the spindle head base, A-axis rotary feed device, and spindle head of the machine tool of FIG. 1.
FIG. 3 is an enlarged partial side view showing the spindle head base, A-axis rotary feed device, and spindle head as viewed from the direction of arrow III of FIG. 1.
FIG. 4 is a partially broken and sectioned perspective view of the A-axis rotary feed device.
FIG. 5 is an enlarged partial side view showing the A-axis rotary feed device and a horizontally positioned spindle head as viewed from the direction of arrow III in FIG. 1.
FIG. 6 is an enlarged partial side view showing the A-axis rotary feed device and a horizontally positioned spindle head as viewed from the direction of arrow VI in FIG. 1.
FIG. 7 is an enlarged partial front view showing the A-axis rotary feed device and a horizontally positioned spindle head as viewed from the direction of arrow VII in FIG. 1.
FIG. 8 is an enlarged partial side view showing the A-axis rotary feed device and a vertically positioned spindle head as viewed from the direction of arrow III of FIG. 1.
FIG. 9 is an enlarged partial side view showing the A-axis rotary feed device and an under-cutting positioned spindle head as viewed from the direction of arrow III of FIG. 1.
FIG. 10 is a partial cross-sectional view of a tool holder illustrated along with a spindle tip portion, and is a view detailing a reference point.
FIG. 11 is a partial cross-sectional view showing a tool holder different from that of FIG. 10 illustrated along with the spindle tip portion, and is a view detailing the reference point.

### DESCRIPTION OF EMBODIMENTS

The preferred embodiments of the present invention will be described below with reference to the attached drawings.

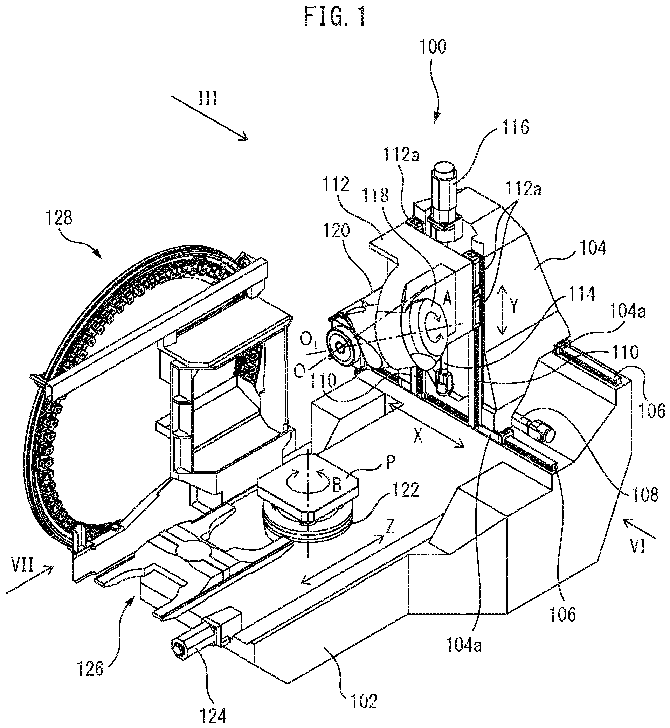

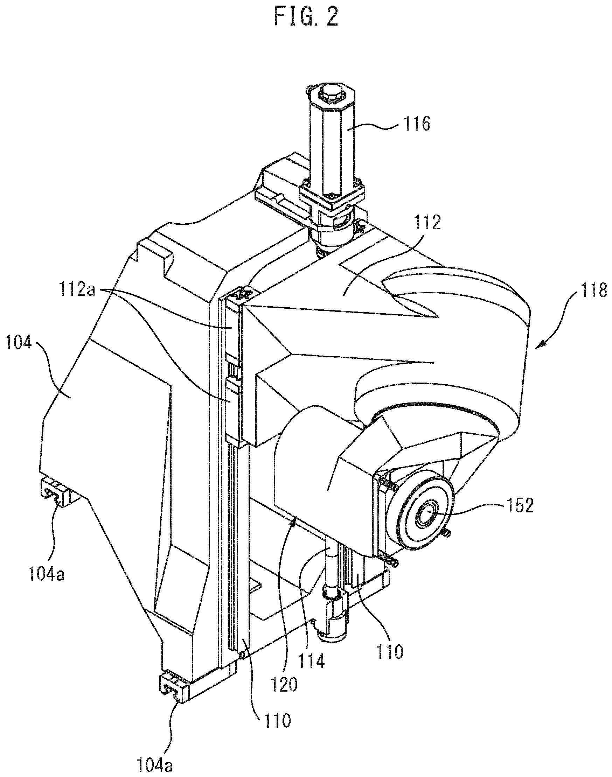

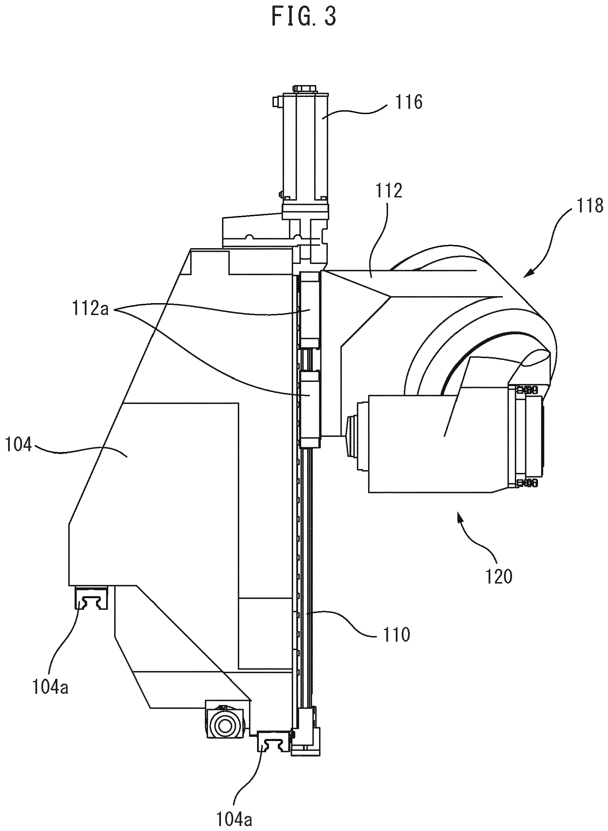

Referring to FIGS. 1 to 3, the machine tool 100 according to the preferred embodiment of the present application is configured as a five-axis machining center which is controlled by an NC device (not illustrated), the machine tool comprising a bed 102 serving as a base mounted on the floor of a factory, a table 122 which is provided on an upper surface of a front portion of the bed 102 so as to be movable in the forwards and rearwards directions or Z-axis direction and to which a pallet P, on which a workpiece (not illustrated) is affixed, is detachably attached, a column 104 provided on a rear end side of the bed 102 so as to be movable in the leftward and rightward directions or X-axis direction, a spindle head base 112 provided on the front surface of the column 104 so as to be movable in the upward and downward directions or the Y-axis direction, and a spindle head 120 attached to the spindle head base 112 and which rotatably supports the spindle 152.

The table 122 is provided on the upper surface of the bed 102 so as to be reciprocally movable along a pair of Z-axis guide rails (not illustrated) which extend in the horizontal Z-axis directions. A ball screw (not illustrated) which extends in the Z-axis direction and a Z-axis servo motor 124 connected to one end of the ball screw are provided on the bed 102 as a Z-axis feed device for reciprocally moving the table 122 along the Z-axis guide rails, and a nut (not illustrated) which engages with the ball screw is attached to the table 122. Furthermore, the machine tool 100 can comprise a Z-axis scale (not illustrated) which measures the Z-axis coordinate position of the table 122. Further, the table 122 constitutes a B-axis feed device which rotatably feeds an attached pallet P about the vertical axis.

An automatic pallet exchanging device 126 which exchanges the pallet P on the table 122 can be arranged in front of the bed 102. Furthermore, a tool magazine 128 which holds a plurality of tools can be arranged to the side of the bed 102. An automatic tool exchange device (not illustrated) which exchanges the tool mounted on a tool holder between the tool magazine 128 and the spindle 152 can be arranged on the tool magazine 128.

The column 104 is provided on a rear end portion of the bed 102 so as to be reciprocally movable along a pair of X-axis guide rails 106 extending in the X-axis direction. Guide blocks 104a which are slidable on the X-axis guide rails 106 are provided on a lower end of the column 104. An X-axis ball screw 108 which extends in the X-axis direction, and an X-axis servo motor (not illustrated) which is connected with one end of the X-axis ball screw 108 are provided on the bed 102 as an X-axis feed device which reciprocally moves the column 104 along the X-axis guide rails 106, and a nut (not illustrated) which engages with the ball screw is attached to the X-axis ball screw 108. Note that the machine tool 100 can comprise an X-axis scale (not illustrated) which measures the X-axis coordinate position of the column 104.

The spindle head base 112 is provided on the front surface of the column 104 so as to be reciprocally movable along a pair of Y-axis guide rails 110 which extend in the upward and downward directions or Y-axis direction (the upward and downward directions in FIG. 1). A guide block 112a which is slidable on the Y-axis guide rails 110 is attached to the back surface of the spindle head base 112. A Y-axis ball screw 114 which extends in the Y-axis direction and a Y-axis servo motor 116 which is connected to one end of the Y-axis ball screw 114 are provided on the column 104 as a Y-axis feed device which reciprocally moves the spindle head base 112 along the Y-axis guide rails 110, and a nut (not illustrated) which engages with the Y-axis ball screw 114 is attached to the spindle head base 112. Note that the machine tool 100 can comprise a Y-axis scale (not illustrated) which measures the Y-axis coordinate position of the spindle head base 112.

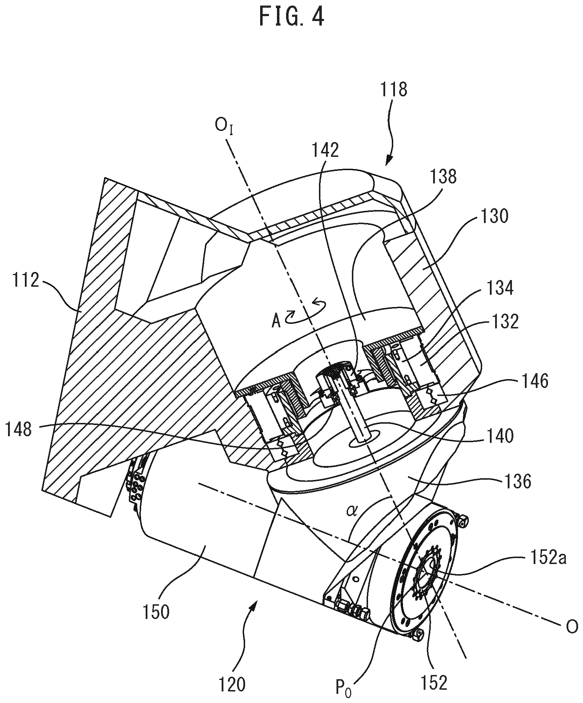

The spindle head 120 is attached to the spindle head base 112 via an inclination axis rotary feed device or A-axis feed device 118. Referring to FIG. 4, the A-axis feed device 118 comprises a hollow housing 130. An A-axis rotation base 136 is attached to the bottom end of the housing 130 via a bearing 146 so as to be rotatable about the inclination axis O_{I}. Within the housing 130, a flange 138 serving as a fixed part protrudes in the radial direction from the inner circumferential surface of the housing 130, and an A-axis shaft 140 is rotatably supported on the flange 138 via a bearing 148. The lower end of the A-axis shaft 140 is connected to the A-axis rotation base 136. The upper end of the A-axis shaft 140 is secured by a nut 142 so as to not move from the flange 138 in the axial direction. Furthermore, an A-axis servo motor comprising a stator 132 and a rotor 134 for rotatably driving the A-axis rotation base 136 is incorporated in the housing 130. Note that the A-axis feed device 118 can comprise a rotary encoder (not illustrated) for measuring the A-axis coordinate, which is the rotational angular position of the A-axis rotation base 136 about the inclination axis O_{I}.

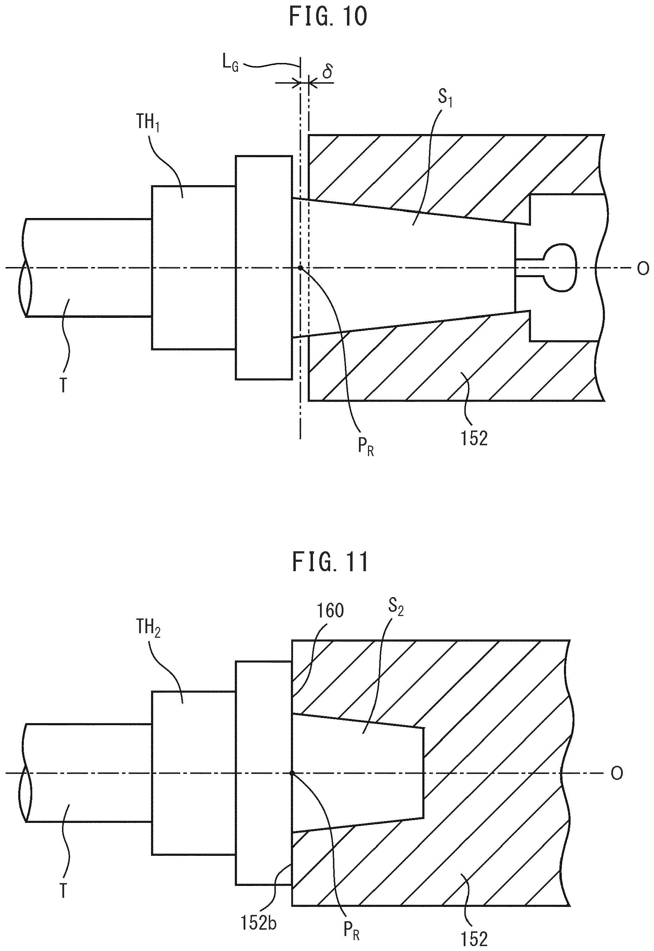

The spindle head 120 is attached to the A-axis rotation base 136. In the present embodiment, the housing 150 of the spindle head 120 is integrally formed with the A-axis rotation base 136. The spindle head 120 supports the spindle 152, which extends along the axis of rotation O, so as to be rotatable about the axis of rotation O. The spindle head 120 has the same structure as conventionally well-known spindle heads, and comprises a bearing (not illustrated) which rotatably supports the spindle 152, a servo motor (not illustrated) which rotatably drives the spindle 152, a clamping device (not illustrated) comprising a draw bar and collets which clamp a tool holder TH (refer to FIGS. 10 and 11) which is mounted in a tapered hole 152a formed in the tip of the spindle 152, and an unclamping device (not illustrated) which unclamps the clamped tool holder TH by pressing the draw bar.

In the present invention, the spindle head 120 is attached to the A-axis rotary feed device 118 so that the inclination axis O_{I} of the A-axis rotary feed device 118 intersects with the axis of rotation O of the spindle 152. Specifically, the spindle head 120 is attached to the A-axis feed device 118 and oriented so that the intersection Po between the inclination axis O_{I} and the axis of rotation O coincides with a reference point P_{R} on the tip part of the spindle 152.

The reference point P_{R} will be described in greater detail with reference to FIGS. 10 and 11.

FIG. 10 shows a tool holder TH₁ having a 7/24 taper shank shape as defined by ISO 7388. A 7/24 taper shank shape encompasses BT (bottle taper) shanks and NT (national taper) shanks. In this case, the reference point P_{R} is defined as the intersection between the gauge line L_{G} and the axis of rotation O. When the tool holder TH₁ having a 7/24 taper shank shape S₁ is mounted in the tapered hole 152a of the spindle 152, the length (tool length) of the tool T in the axial direction is defined as the length from the gauge line L_{G} to the tip of the tool T. Though the gauge line L_{G} depends on the accuracy of the shank shape, generally, the gauge line L_{G} is present in a position δ = 0.1 to 0.2 mm from the end surface 152b of the spindle 152. When the tool holder TH₁ has a 7/24 taper shank shape S₁, the reference point P_{R} on the gauge line L_{G} is defined as the intersection Po between the inclination axis O_{I} and the axis of rotation O.

FIG. 11 shows a tool holder TH₂ having a 1/10 taper hollow shank shape S₂ as defined by ISO 12164. An HSK shank including a flanged contact surface (rear surface) 160 is included in the 1/10 taper hollow shank shape S₂. In this case, since the flanged rear surface 160 of the tool holder TH₂ contacts the end surface 152b of the spindle 152, the length of the tool mounted in the tool holder TH₂ is defined as the length from the flanged rear surface 160 to the tip of the tool T. When the tool holder TH₂ has a 1/10 taper hollow shank shape S₂, the reference point P_{R} is defined as the intersection between the end surface 152b of the spindle 152 and the axis of rotation O.

Specifically, in the present invention, in both the case of the tool holder TH₁ having a 7/24 taper shank shape S₁ and the case of the tool holder TH₂ having a 1/10 taper hollow shank shape, the reference point P_{R} is the reference point or origin for setting the tool length, and simultaneously, is a reference point of the machine coordinate system of the machine tool 100. The NC device (not illustrated) of the machine tool 100 controls the X-axis, Y-axis, and Z-axis feed axes based on the coordinates of the reference point P_{R}.

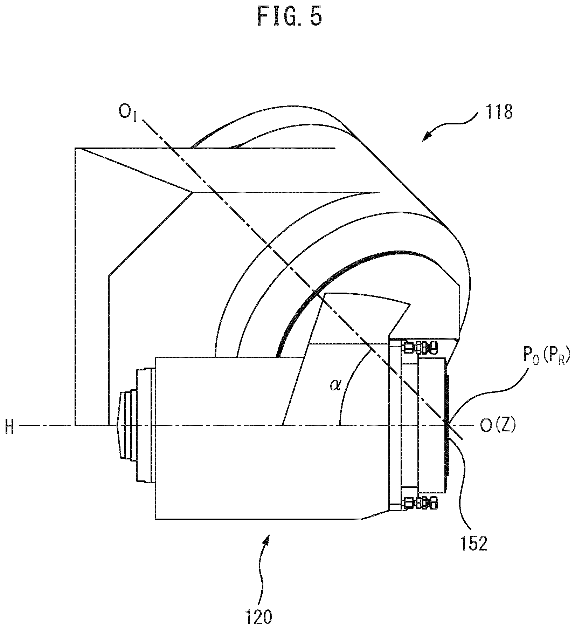

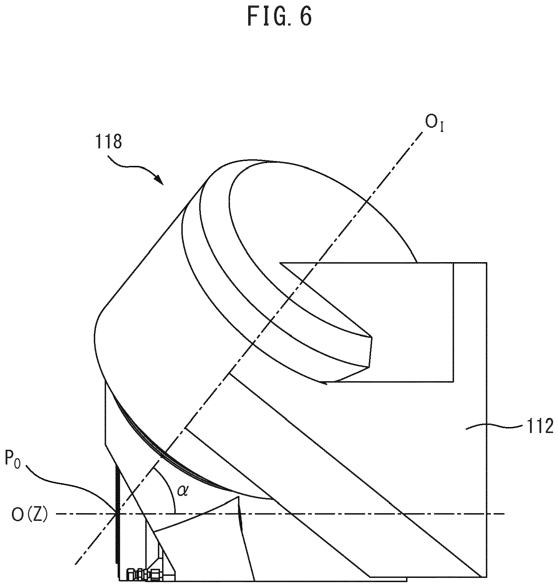

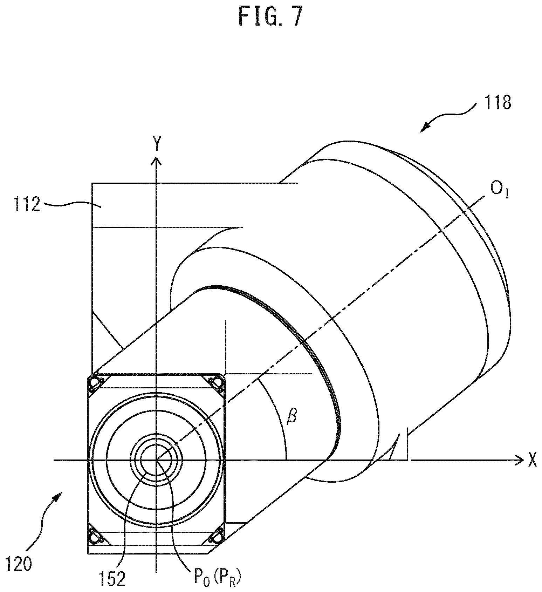

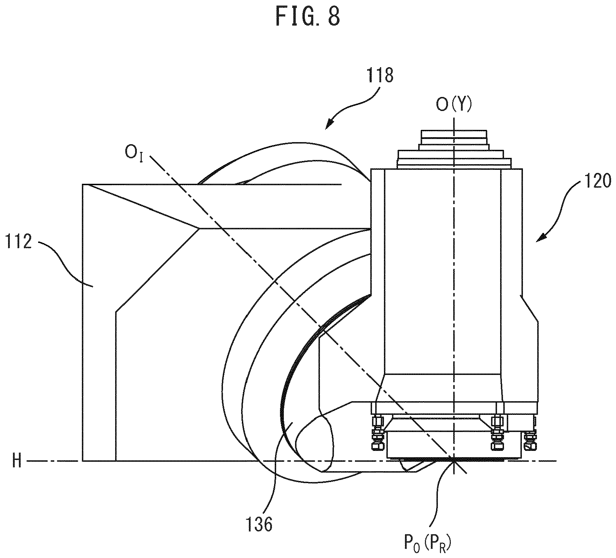

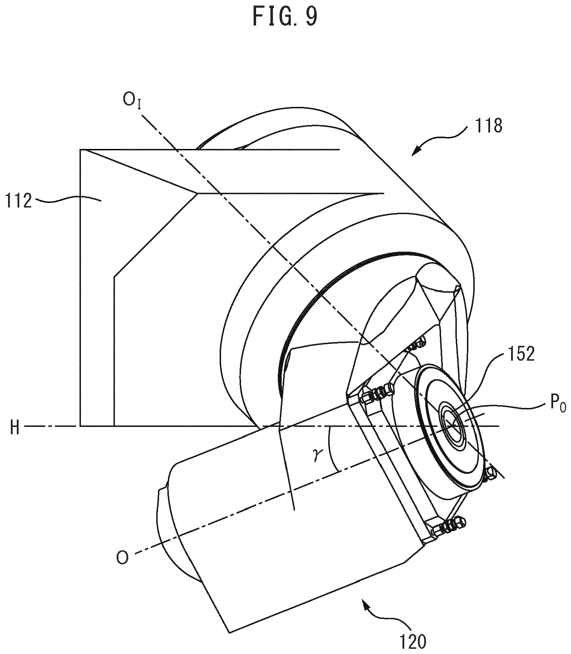

In the present embodiment, the angle α between the inclination axis O_{I} and the axis of rotation O is 51.15°, as shown in FIG. 4. Furthermore, the origin position of the A-axis rotary feed device 118 is defined as the position at which the axis of rotation O is parallel to the Z-axis and the spindle head 120 is in the horizontal position H. When the A-axis rotary feed device 118 is in the origin position, the A-axis coordinate thereof is 0°. When the A-axis rotary feed device 118 is in the origin position, the inclination axis O_{I} extends in a direction inclined by an angle β = 32.09° with respect to the X-axis. Specifically, as an example of the present embodiment, the inclination axis O_{I} extends in a direction inclined by an angle α = 51.15° with respect to the Z-axis and by an angle β = 32.09° with respect to the X-axis. As a result, the A-axis rotary feed device 118 is capable of positioning the spindle head 120 at any rotational angular position about the inclination axis O_{I} between the vertical position shown in FIG. 8 and the undercutting position shown in FIG. 9, including the horizontal position shown in FIGS. 5 to 7. In the vertical position, the end surface 152b of the spindle 152 faces downwardly, and the axis of rotation O is inclined by 90° with respect to the horizontal plane. At this time, as an example of the present embodiment, the A-axis coordinate, which is the rotational angular position about the inclination axis O_{I}, is 113.2°. Furthermore, in the undercutting position, the end surface of the spindle 152 faces upwardly, and the angle γ between the axis of rotation O and the horizontal position H is maximum at 25.8°. At this time, the A-axis coordinate, which is the rotational angular position about the inclination axis O_{I}, is -66.8°.

In the present embodiment, since the spindle head 120 is oriented relative to the A-axis rotary feed device 118 so that the inclination axis O_{I} intersects the axis of rotation O at the reference point P_{R}, and the spindle head 120 is attached to the A-axis rotary feed device 118 so as to be rotationally feedable, the machine tool 100 is capable of performing machining of a workpiece without a reduction in machining accuracy regardless of the coordinates of the A-axis rotary feed device.

Specifically, since the A-axis rotary feed operation can be regarded as a turning operation in which the spindle head changes pos about the vicinity of the center of the spindle tip, in the present embodiment, the distance between the inclination axis O_{I} and the machining point of the tool tip is reduced to minimize the lever ratio to the greatest degree possible to prevent a decrease in machining accuracy due to A-axis indexing errors. Further, in the present embodiment, the turning operations of the structures about the spindle head in accordance with the A-axis rotary feeding become compact, whereby an increase in the stroke of the machine is suppressed, and interference between the spindle head and the workpiece is less likely to occur. Furthermore, in the present embodiment, when the spindle assumes a downwardly facing posture, the distance from the upper surface of the pallet to the end surface of the spindle can be increased as compared to conventional fork heads, whereby surface machining of tall workpieces can be accommodated. Note that though the case in which the intersection P₀ between the inclination axis O_{I} and the axis of rotation O of the spindle coincides with the reference point P_{R} of the tool length was described in the present embodiment, a configuration in which the reference point is defined as an arbitrary point determined on the axis of rotation O of the spindle on the tool tip side, and the reference point is defined as the intersection between the inclination axis O_{I} and the axis of rotation O of the spindle may be adopted.

### REFERENCE SIGNS LIST

- 100: machine tool
- 102: bed
- 104: column
- 112: spindle head base
- 118: A-axis rotary feed device
- 120: spindle head
- 122: table
- 136: A-axis rotation base
- 152: spindle

## Claims

1. A machine tool having a spindle having a tip on which a tool is mounted, a spindle head which supports the spindle so as to rotate about an axis of rotation, orthogonal triaxial linear feed axes which move the spindle and a table on which a workpiece is attached relative to each other, and a rotary feed axis which can change the orientation of the axis of rotation of the spindle, the machine tool comprising:
a rotary feed axis device configured to rotate the spindle heat about an inclination axis which is not parallel to any of the linear feed axes, and intersects with the axis of rotation of the spindle, and
a spindle head base which rotatably supports the spindle head so that an intersection between the axis of rotation of the spindle and the inclination axis coincides with a reference point defined on a tip side of the spindle.

2. The machine tool according to claim 1, wherein the reference point is a reference point of the length of the tool mounted on the tip of the spindle in the axial direction.

3. The machine tool according to claim 1, wherein the reference point is a reference point on a machine coordinate system of the machine tool.

4. The machine tool according to claim 1, wherein the spindle head base is relatively movable with respect to the table in at least two axial directions of the orthogonal triaxial directions.

5. The machine tool according to claim 4, further comprising a bed as a base mounted on a floor, and a table which is provided on a front portion of an upper surface of the bed so as to be movable in the horizontal forwards and backwards directions and on which a workpiece is affixed, and
a column which is attached on a rear portion of the upper surface of the bed so as to be movable in the horizontal left and right directions perpendicular to the horizontal forwards and backwards directions, which are movement directions of the table, wherein
the spindle head base is attached to a front surface of the column so as to be reciprocally movable in the vertical direction.

6. The machine tool according to claim 5, wherein the table can rotatably feed the workpiece about an axis extending in the vertical direction.
